(19) Europäisches Patentamt / European Patent Office / Office européen des brevets

(11) **EP 3 013 090 A1**

(12) **EUROPEAN PATENT APPLICATION**

(43) Date of publication:
**27.04.2016 Bulletin 2016/17**

(51) Int Cl.:
***H04W 24/02*** (2009.01)

(21) Application number: **14306676.9**

(22) Date of filing: **22.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Malanchini, Ilaria**
  **70435 Stuttgart (DE)**
• **Gruber, Markus**
  **70435 Stuttgart (DE)**

(74) Representative: **2SPL Patentanwälte PartG mbB**
**Postfach 15 17 23**
**80050 München (DE)**

Remarks:
Amended claims in accordance with Rule 137(2) EPC.

(54) **Apparatuses, methods and computer programs for determining information related to a dynamic activation of one or more shared cells in a mobile communication system**

(57) Embodiments relate to apparatuses, methods and computer programs for determining information related to a dynamic activation of one or more shared cells (100) in a mobile communication system (300) further comprising two or more cells (310a, 310b) subject to capacity demand thresholds, wherein the one or more shared cells (100) are shared among two or more operators, comprising at least one input (12) for receiving information related to a first and second capacity demand threshold, a first and second current capacity demand in at least part of the communication system, from a first and a second provider, respectively. The apparatus (10) further comprises a control module (14) to provide information related to the dynamic activation of at least one of the one or more shared cells (100) to offload load from at least one of the two or more cells (310a, 310b) subject to capacity demand thresholds. Embodiments further provide an apparatus (20) for providing information related to current capacity demand and capacity demand thresholds.

Fig. 1

**Description**

<u>Technical Field</u>

Embodiments relate to apparatuses, methods and computer programs for determining information related to a dynamic activation of one or more shared cells in a mobile communication system.

<u>Background</u>

This section introduces aspects that may be helpful in facilitating a better understanding of the invention(s). Accordingly, the statements of this section are to be read in this light and are not to be understood as admissions about what is in the prior art or what is not in the prior art.

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. The demands are growing for both directions of transmission, in the DownLink (DL) for transmission from the network infrastructure to a mobile transceiver, as well as in the UpLink (UL) for transmission from a mobile transceiver to the network infrastructure.

Current mobile communication systems increasingly rely on a Heterogeneous Network (HetNet) of larger macro cell base stations and small cell base stations. Small cell base stations can be used to cover areas where the macro cell base stations do not provide coverage, to augment the capacity available in the mobile communication system by offloading some requests, which could be handled by the macro cell base station, to small cell base stations in the same coverage area, and to improve network efficiency. HetNets and small cells may appear to be an efficient approach to increase the capacity and improve network efficiency. However, deployments of large number of small cells by each operator might not be possible, both for environment and cost constraints.

As macro cell base stations are usually overprovisioned, e.g. their capacity may be a multiple of the average capacity demand over a specified timeframe. During low or normal demand the macro cell base stations may be able to handle all requests in their coverage area. For handling peak demands, which may occur at certain times of the day, at certain days in the year, or because the operator offers a certain time-limited incentive to increase the demand, additional base stations may be activated to cope with the demand and still maintain a certain connection quality or individual bandwidth in the network.

Using small cells to augment the capacity, providers can cope with peak demands. Small cells can be individually activated or deactivated, depending on the load of the network, to augment the capacity when needed, or save power when deactivated. As small cell base stations can only cover a relatively small area compared to a macro cell base station, a number of small cell base stations may be used to provide augmented capacity over a larger area. As there is only a finite number of places suitable for the deployment of small cell base stations, the deployment of a large number of small cell base stations is costly, and all operators of mobile communication systems may face the same challenges. Operators are increasingly sharing small cell base stations, at fixed, contractually determined long-term capacity sharing ratios.

<u>Summary of illustrative Embodiments</u>

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, methods and computer programs related to a dynamic activation of one or more shared cells in a mobile communication system. As operators are increasingly relying on cells shared among multiple operators (shared cells), inefficiencies are beginning to show. As the shared cells are usually shared at contractually fixed capacity ratios between operators, peak demand for a first operator may require the activation of a number of additional shared cells to satisfy the capacity demand of the first operator, while other operators don't need their capacity share of the activated small cells, yet still have to cover the costs of their sharing ratio of the activated cells, without actually requiring the additional capacity. To lower the number of shared cells that need to be activated, e.g. for the purpose of energy efficiency, embodiments may provide mechanisms related to the dynamic activation of one or more shared cells at dynamic sharing ratios.

Embodiments provide an apparatus for determining information related to a dynamic activation of one or more shared cells in a mobile communication system. The mobile communication system further comprises two or more cells subject to capacity demand thresholds. The one or more shared cells are shared among two or more operators. The apparatus comprises at least one input for receiving information related to a first capacity demand threshold for at least one cell subject to capacity demand thresholds of a first operator, information related to a second capacity demand threshold for at least one cell subject to capacity demand thresholds of a second operator, information related to a current capacity demand for the first operator in at least a part of the mobile communication system, and information related to a current capacity demand for the second operator in at least a part of the mobile communication system. The apparatus further comprises a control module to provide the information related to the dynamic activation of at least one of the one or more shared cells to offload load from at least one of the two or more cells subject to capacity demand thresholds in case the first current capacity demand exceeds the first capacity demand threshold or in case the second current capacity demand exceeds the second capacity demand threshold. As the dynamic activation of the one or more shared cells is based on current capacity demand and capacity demand thresholds of the two or more operators, some embodiments may allow the dynamic activation of fewer shared cells at a dynamic traffic or load sharing ratio, and still satisfy all capacity demand thresholds, by making better use of the total capacity of the shared cells that are activated.

In some embodiments the information related to the first capacity demand threshold may be based on a first operator policy, and the information related to the second capacity demand threshold may be based on a second operator policy. The first and/or the second operator policy may be related to one or more elements of the group of a desired drop probability, a desired admission probability, a desired Quality of Service (QoS) requirement, a desired overprovisioning capacity headroom, or a desired energy consumption. As operators may have different priorities or policies when operating a mobile communication system, they may choose to adjust the capacity demand threshold according to said priorities or policies.

In various embodiments the control module may be configured to dynamically repartition the capacity provided by the shared cell between the two or more operators based on the first capacity demand threshold and/or the second capacity demand threshold, which may increase overall utilization of the capacity of the shared cell.

In some embodiments, the controller module may be configured to compare the first capacity demand threshold for the first operator and/or the second capacity demand threshold for the second operator to the current capacity demand for the first operator and/or the current capacity demand for the second operator, so it may determine whether the activation of an additional shared cell is necessary or whether absolute capacity demands of the operators can be satisfied based on already activated shared cells.

In various embodiments the control module may be configured to dynamically activate the one or more shared cells to avoid the first current capacity demand violating the first capacity demand threshold, and/or to avoid the second current capacity demand violating the second capacity demand threshold. The additionally activated shared cell may free up capacity in the cells subject to capacity demand thresholds such that the respective capacity demand thresholds can be maintained by activating shared cells.

The first capacity demand threshold may, in some embodiments, be defined by the first operator independently from the second capacity demand threshold, which may be defined by the second operator. So operators may be able adjust the threshold based on short-term demands.

In some embodiments, the input may be configured to obtain at least some of the information from at least one base station transceiver operated by the one or more operators sharing the one or more shared cells. Embodiments may take advantage of a base station transceiver, which may be able to provide metrics on the utilization of at least part of a mobile communication system.

In various embodiments the one or more shared cells and/or the two or more cells subject to capacity demand thresholds may comprise one or more cells of the group of macro cells, metro cells, micro cells, pico cells, or femto cells. The two or more cells subject to capacity demand thresholds may also correspond to non-shared cells of different operators.

In some embodiments, the information related to the activation of at least one of the one or more shared cells may be derived from

$$t_i \leq \frac{capacity_{max,i}}{capacity_{demand,i}}$$

wherein $t_i$ corresponds to the first capacity demand threshold of the first operator i, $capacity_{max,i}$ corresponds to the capacity available for the first operator i in at least the one cell subject to capacity demand thresholds, and $capacity_{demand,i}$ corresponds to the current capacity demand for the first operator i in at least the one cell subject to capacity demand thresholds. In some embodiments, additional shared cells may be activated if the condition is no longer met. The information related to the activation of at least one of the one or more shared cells may further be derived from

$$t_n \leq \frac{capacity_{max,n}}{capacity_{demand,n}}$$

wherein $t_n$ corresponds to the capacity demand threshold of the second operator n, $capacity_{max,n}$ corresponds to the capacity available for the second operator n in at least the one cell subject to capacity demand thresholds, and $capacity_{demand,n}$ corresponds to the current capacity demand for the second operator n in at least the one cell subject to capacity demand thresholds. If the first operator i cannot meet the capacity demand threshold $t_i$, the control module may be configured to increase a capacity share of the first operator in the at least one shared cell for as long as the capacity demand threshold $t_n$ of the second operator in the at least one cell subject to capacity demand thresholds of the second operator is met, and to activate at least one of the one or more shared cells otherwise, so at least in some embodiments at all times, the capacity demand thresholds may be met.

Furthermore, embodiments provide an apparatus for a base station transceiver of a mobile communication system. The mobile communication system further comprises one or more shared cells. The apparatus for the base station transceiver may comprise at least one output for providing information related to a capacity demand threshold and information related to a current capacity demand. The at least one output may supply a control module configured to dynamically activate shared cells with the required information according to the above description.

In further embodiments, the information related to the capacity demand threshold may be based on an operator policy. The information may be related to one or more elements of the group of a desired drop probability, a desired admission probability, a desired quality of service requirement, a desired overprovisioning capacity headroom, or a desired energy consumption, so the information may be related to an operator's priorities or policies.

The information related to the capacity demand threshold and the capacity demand may, in some embodiments, also be derived from

$$t \leq \frac{\lambda_{M,max}}{x - x_{offload}}$$

wherein $t$ corresponds to the capacity demand threshold of the operator, $\lambda_{M,max}$ corresponds to an upper capacity utilization limit of a base station transceiver of the operator, $x$ corresponds to the total capacity currently demanded by the operator, and $x_{offload}$ corresponds to the total load currently offloaded by the shared cells. $x_{offload}$ may be derived from $x_{offload} = \sum_{i=1}^{b} f_i \cdot \lambda_{S,i,max}$, where b is the number of shared cells currently activated for two or more

operators, $f_i$ is the fraction of the capacity of the shared cell $i$ of the one or more shared cells that is currently allocated to the operator, and $\lambda_{S,i,max}$ corresponds to an upper capacity utilization limit of a shared cell $i$ of the one or more shared cells.

Embodiments further provide a method for determining information related to a dynamic activation of one or more shared cells in a mobile communication system. The mobile communication system further comprises two or more cells subject to capacity demand thresholds and the one or more shared cells are shared among two or more operators. The method comprises receiving information related to a first capacity demand threshold of a cell subject to capacity demand thresholds of a first operator and receiving information related to a second capacity demand threshold of a cell subject to capacity demand thresholds of a second operator. It further comprises receiving information related to a current capacity demand for the first operator in at least a part of the mobile communication system and receiving information related to a current capacity demand for the second operator in at least a part of the mobile communication system. The method further comprises providing information related to the dynamic activation of at least one of the one or more shared cells in case the first capacity demand exceeds the first capacity demand threshold or in case the second capacity demand exceeds the second capacity demand threshold.

Embodiments further provide a method for a base station transceiver of a mobile communication system. The mobile communication system further comprises one or more shared cells. The method further comprises providing information related to a capacity demand threshold and providing information related to a current capacity demand.

Embodiments further provide a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

Brief description of the figures

Some other features or aspects will be described using the following non-limiting embodiments of apparatuses or methods or computer programs or computer program products by way of example only, and with reference to the accompanying figures, in which:

Fig. 1 illustrates a block diagram of an embodiment of an apparatus for determining information related to a dynamic activation of one or more shared cells in a mobile communication system;

Fig. 2 illustrates a block diagram of an embodiment of an apparatus for a base station transceiver in a mobile communication system;

Fig. 3 shows a block diagram of a flow chart of an embodiment of a method for determining information related to a dynamic activation of one or more shared cells in a mobile communication system;

Fig. 4 shows a block diagram of a flow chart of an embodiment of a method for a base station transceiver in a mobile communication system;

Fig. 5 illustrates an embodiment of an apparatus with two cells subject to capacity demand thresholds, and two shared cells;

Fig. 6 illustrates a block diagram of an embodiment of a mechanism for a dynamical repartitioning of the capacity of a shared cell;

Fig. 7 shows a diagram of a traffic profile over the day, where the x-axis depicts the hours of the day and the y-axis depicts the normalized traffic, where 1 corresponds to 2.26 arrivals/s;

Fig. 8 shows a table of scenario parameters of an embodiment;

Fig. 9 shows a diagram of the over-provisioning curves of an embodiment when small cells are shared 50%-50%;

Fig. 10 shows a diagram of the over-provisioning curves of an embodiment when dynamic sharing is applied;

Fig. 11 shows a diagram of the sharing ratios assigned to two operators in an embodiment;

Fig. 12 shows a diagram of the number of switched-on small cells activated by the fixed and dynamic sharing mechanisms of an embodiment;

Fig. 13 shows a diagram of the over-provisioning curves of an embodiment with a flexible sharing ratio when the first operator requires an over-provisioning constraint of 2 and the second operator requires an over-provisioning constraint of 1.75; and

Fig. 14 shows a diagram of the over-provisioning curves of an embodiment with a flexible sharing ratio when the first operator requires an over-provisioning constraint of 2 and the second operator requires an over-provisioning constraint of 1.7.

Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following some embodiments of apparatuses, methods and computer programs to determine information related to a dynamic activation of one or more shared cells in a mobile communication system will be described.

One concept that may be pursued in embodiments by operators is infrastructure sharing. In HetNets scenarios, infrastructure sharing may be done both at the macro layer and at the small cell layer. In some embodiments it is assumed that operators will keep controlling their macro base stations but they will share small cells. In order to facilitate infrastructure sharing in some embodiments, operators may benefit from automatic and dynamic mechanisms that may allow setting operator specific policies in a secure, trustful and efficient way.

In some embodiments a parameter for a shared-based network may be the sharing ratio, i.e., how many resources go to each operator. Generally speaking, sharing ratios may be discussed case by case by operators and defined in a contract. However, embodiments may provide dynamic mechanisms to translate operator policies in appropriate sharing ratios and may thereby provide a more efficient approach.

In some embodiments infrastructure sharing may be used as a potential cost reducer. However, instead of assuming that operators have a fixed sharing ratio on which they agree in a contract and satisfying this ratio by the infrastructure provider, embodiments may use dynamic sharing ratios. Embodiments might not use a compensation measure if operators temporarily deviate from the agreed ratio. Embodiments may consider that normally, the ratio on which the operators agree, depends on operator-specific policies. What this long-term (i.e. order of months or years) contract-oriented solution might not take into account is that operators would like to have the opportunity to change their policies on a short-term (i.e. hours) scale, e.g., in order to accommodate a new type of service, which may be taken into account by embodiments. Some embodiments may dynamically translate modified policies into a new sharing ratio and may allow operators dynamically rededicating their RANs to new services.

At least some embodiments may break a contract-oriented sharing paradigm for infrastructure sharing where humans from multiple operators have to negotiate a contract with an agreed sharing ratio. Embodiments may enable multiple operators to configure and program the shared network independently from each other. In some embodiments operators may translate their policies into a parameter (eventually chosen by the operators themselves). Operators may then instantaneously and dynamically update their policies. Taking into account different values of this parameter (e.g. one value per operator), the procedure may automatically determine the sharing ratios for the operators, such that the policies of all involved operators are met, in some embodiments even optimally, in a mutually beneficial way and such that the solution may also provide benefits from an energy efficiency point of view.

In general, the mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

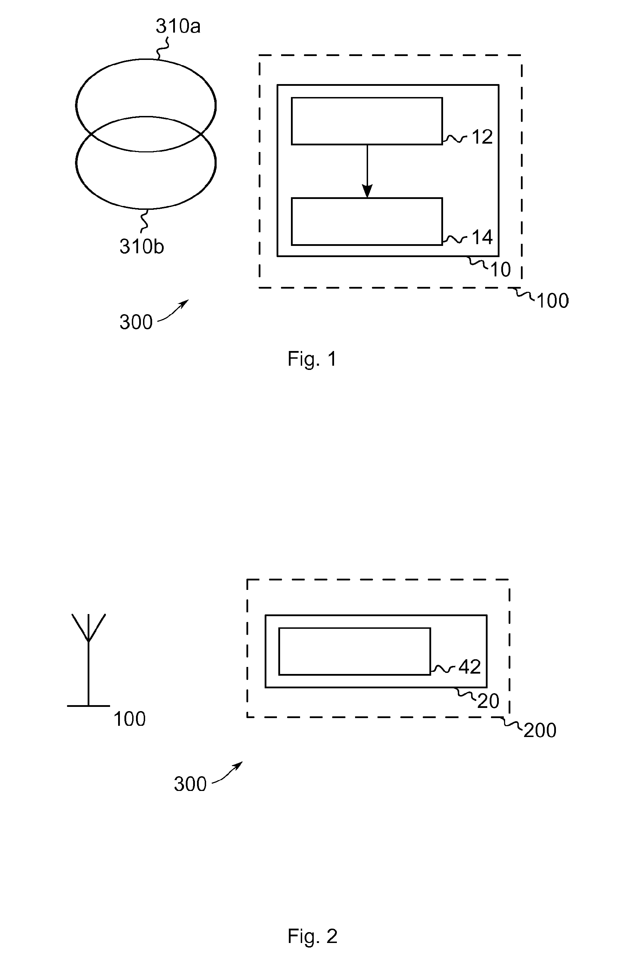

Fig. 1 illustrates a block diagram of an embodiment of an apparatus 10 for determining information related to a dynamic activation of one or more shared cells 100, to which it will be also referred to as shared cell apparatus 10, in a mobile communication system 300. Embodiments may further provide one or more shared cells 100 (indicated optionally by broken lines in Fig. 1) shared by two or more operators comprising an apparatus 10 for said one or more shared cells 100. Furthermore, embodiments may provide two or more cells subject to capacity demand thresholds 310a, 310b. In other words in embodiments the apparatus 10 may be comprised, in a base station transceiver operating one or more shared cells 100, in a base station transceiver operating one or more cells subject to capacity demand thresholds 310a, 310b, or in another network entity of the mobile communication system 300. Accordingly, embodiments also provide a base station transceiver operating one or more shared cells 100, a base station transceiver operating one or more cells subject to capacity demand thresholds 310a, 310b, or any other network entity of the mobile communication system 300 comprising the apparatus 10.

The shared cell apparatus 10 comprises at least one input 12 for receiving information related to a first capacity demand threshold for at least one cell 310a subject to capacity demand thresholds of a first operator, information related to a second capacity demand threshold for at least one cell 310b subject to a capacity demand threshold of a second operator, information related to a current capacity demand for the first operator in at least a part of the mobile communication system 300, and information related to a current capacity demand for the second operator in at least a part of the mobile communication system 300. Information related to a capacity demand threshold may be based on information related to an operator policy, which may be derived from operator priorities related to a desired drop probability, a desired admission probability, a desired QoS requirement, a desired overprovisioning capacity headroom, or a desired energy consumption. Information related to a current capacity demand may be related to a number of mobile transceivers connected to at least part of the mobile communication system, traffic load on at least part of the mobile communication system 300, or a number of requests from mobile transceivers in at least part of a mobile communication system 300. An input may correspond to an interface for receiving information, which may be represented by digital (bit) values according to a specified code or protocol, within a module, between modules or, via the mobile communication system 300 or any other means of data transmission, between modules of different entities.

The shared cell apparatus 10 further comprises a control module 14, which is coupled to the input 12, and which is configured to provide information related to the dynamic activation of at least one of the one or more shared cells 100 to offload load from at least one of the two or more cells 310a, 310b subject to capacity demand thresholds in case the first current capacity demand exceeds the first capacity demand threshold or in case the second current capacity demand exceeds the second capacity demand threshold. In embodiments the control module 14 may be implemented using one or more processing units, one or more processing devices, any means for processing, such as a processor, a computer or a programmable hardware component being operable with accordingly adapted software. In other words, the described functions of the control modules 14 may as well be implemented in software, which is then executed on one or more programmable hardware components. Such hardware components may comprise a general purpose processor, a Digital Signal Processor (DSP), a microcontroller, etc.

In embodiments, the one or more shared cells 100 and the two or more cells subject to capacity demand thresholds 310a, 310b may comprise one or more cells of the group of macro cells, metro cells, micro cells, pico cells, or femto cells. The two or more cells subject to capacity demand thresholds 310a, 310b may also correspond to non-shared cells of different operators.

The shared cell apparatus 10 may be co-located at any of the other entities described, e.g. co-located with the cells subject to capacity demand thresholds 310a, 310b, co-located with one of the shared cells 100, or may be a separate entity in the mobile communication system 300.

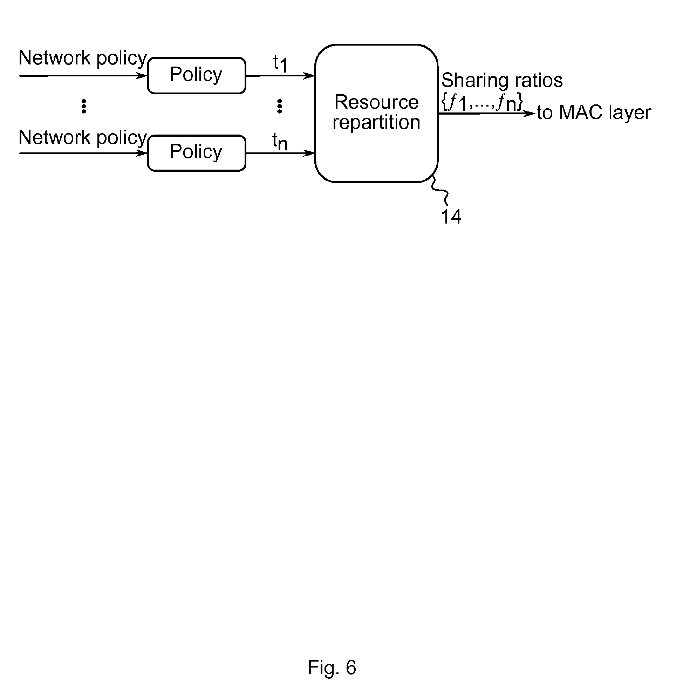

In various embodiments as shown in Fig. 6, the information related to the first capacity demand threshold may be based on a first operator policy, and the information related to the second capacity demand threshold may be based on a second operator policy. Fig. 6 shows an embodiment with a control module 14 receiving network policies of two or more operators in term of parameters $t_1 \ldots t_n$. The control module 14 is then configured to determine sharing ratios (resource partitioning) and dynamic activation information for the shared cells. The sharing ratios are then informed to the activated small cells in terms of MAC-layer signaling in this embodiment. The first and/or the second operator policy may be related to one or more elements of the group of a desired drop probability, a desired admission probability, a desired QoS, a desired overprovisioning capacity headroom, or a desired energy consumption. In some embodiments the information related to a first and/or second operator threshold and/or the operator policy of the first and/or the second operator may differ, and may be defined independently and dynamically by the respective operators, possibly also with immediate or short-term effect.

In embodiments, the control module 14 may be configured to dynamically repartition the capacity provided by the shared cell 100 between the two or more operators based on the first capacity demand threshold and/or the second capacity demand threshold, as long as the first and second capacity demand thresholds of the first and second operator are met. In various embodiments, the controller module 14 may be configured to compare the first capacity demand threshold for the first operator and/or the second capacity demand threshold for the second operator to the current capacity demand for the first operator and/or the current capacity demand for the second operator, to determine, whether the first and second capacity demand thresholds are met. In some embodiments, the control module 14 may be configured to dynamically activate the one or more shared cells to avoid the first current capacity demand violating the first capacity demand threshold, and/or to avoid the second current capacity demand violating the second capacity demand threshold.

The information related to the activation of at least one of the one or more shared cells 100 may in a more detailed embodiment be derived from

$$t_i \leq \frac{capacity_{max,i}}{capacity_{demand,i}}$$

wherein $t_i$ corresponds to the first capacity demand threshold of the first operator i, $capacity_{max,i}$ corresponds to the capacity available for the first operator i in at least the one cell 310a subject to capacity demand thresholds, and $capacity_{demand,i}$ corresponds to the current capacity demand for the first operator i in at least the one cell 310a subject to capacity demand thresholds. In some embodiments, additional shared cells may be activated if the condition is no longer met. To account for the second operator,

$$t_n \leq \frac{capacity_{max,n}}{capacity_{demand,n}}$$

wherein $t_n$ corresponds to the capacity demand threshold of the second operator n, $capacity_{max,n}$ corresponds to the capacity available for the second operator n in at least the one cell 310b subject to capacity demand thresholds, and $capacity_{demand,n}$ corresponds to the current capacity demand for the second operator n in at least the one cell 310b subject to capacity demand thresholds. If the first operator i cannot meet the capacity demand threshold $t_i$, the control module 14 may be configured to increase a capacity share of the first operator in the at least one shared cell 100 for as long as the capacity demand threshold $t_n$ of the second operator in the cell subject to capacity demand thresholds 310b is met, and to activate at least one of the one or more shared cells 100 otherwise.

In some embodiments, the input 12 may be configured to obtain at least some of the information from at least one base station transceiver 200 as will be introduced in the sequel, operated by the one or more operators sharing the one or more shared cells 100.

Fig. 2 illustrates a block diagram an apparatus 20 for a base station transceiver 200 of a mobile communication system 300, to which it will be also referred to as base station apparatus 20. Embodiments also provide a base station transceiver 200 comprising the base station transceiver apparatus 20 and/or a mobile communication system 300 comprising a base station transceiver 200 with the apparatus 20 and/or the above apparatus 10. The mobile communication system 300 further comprises one or more shared cells 100. The base station apparatus 20 comprises at least one output 42 for providing information related to a capacity demand threshold and information related to a current capacity demand. In some embodiments, the base station transceiver 200 may correspond to one of the cells subject to capacity demand thresholds 310a, 310b. An output may correspond to an interface for transmitting information, which may be represented by digital (bit) values according to a specified code, within a module, between modules or, via the mobile communication system 300 or any other means of data transmission, between modules of different entities.

In some embodiments, the information related to the capacity demand threshold may be based on an operator policy, and the information may be related to one or more elements of the group of a desired drop probability, a desired admission probability, a desired QoS requirement, a desired overprovisioning capacity headroom, or a desired energy consumption.

In embodiments, the information related to the capacity demand threshold and the capacity demand may be derived from

$$t \leq \frac{\lambda_{M,max}}{x - x_{offload}}$$

wherein $t$ corresponds to the capacity demand threshold of the operator, $\lambda_{M,max}$ corresponds to an upper capacity utilization limit of a base station transceiver 200 of the operator, $x$ corresponds to the total capacity currently demanded by the operator, $x_{offload}$ corresponds to the total load currently offloaded by the shared cells, where

$x_{offload} = \sum_{i=1}^{b} f_i \cdot \lambda_{S,i,max}$,    where $b$ is the number of shared cells 100 currently activated for two or more operators, $f_i$ is the fraction of the capacity of the shared cell $i$ of the one or more shared cells 100 that is currently allocated to the operator, and $\lambda_{S,i,max}$ corresponds to an upper capacity utilization limit of a shared cell $i$ of the one or more shared cells 100. In some embodiments, $f_i$ may be adjusted dynamically based on information related to the capacity demand threshold and/or based on information related to the current capacity demand.

In one embodiment, N operators share cells in a heterogeneous network (HetNet, i.e., there are macro cells and small cells) scenario. Furthermore, each operator owns and controls a cell subject to capacity demand thresholds. This scenario is consistent with the case described above in which several small cells will be deployed to face the increasing traffic demand, and infrastructure sharing will be forced by economic reasons as well as external constraints. However, embodiments may be applicable in scenarios where only macro base stations are shared.

Operators sharing a common network might have in general different network policies. Examples of network policies are:

- Drop probability/Admission probability
- Quality of Service (QoS) requirements
- Energy saving

Each operator may autonomously decide on one or more specific network policies.

In some embodiments operator policies may then be translated into different values of the same parameter t, e.g. over-provisioning, which may correspond to an operator's capacity demand threshold. Cells subject to capacity demand thresholds are subject to over-provisioning in the following embodiment. For instance, an over-provisioning constraint of 2 means that a macro cell should use at maximum ½ of its resource blocks (averaged over a given time window). Furthermore, a specific over-provisioning value influences operators' strategy. E.g., a high over-provision requirement may correspond to high energy consuming but at the same time high quality of service. Also, different over-provisioning values may correspond to different probabilities that connections are not admitted or dropped and thus service availability.

Each operator n may choose a specific minimum allowed value of over-provisioning factor $t_n$, such that $t_n$, which will further also be referred to as over-provisioning constraint, reflects the specific policy. It is assumed that, through experience, operators are aware on how to translate a specific policy into a specific over-provisioning value (capacity demand threshold). The actual over-provisioning value depends on the current traffic of operator n represented by $x_n$. $\lambda_{M,max}$ is the maximum traffic the macro cell 310a, 310b of operator n is able to accommodate. In order to satisfy the operator's policy, the over-provisioning constraint should be less than or equal to the actual over-provision value, that in formula is:

$$t_n \leq \frac{\lambda_{M,max}}{x_n}$$

If some of the traffic is offloaded from the cell subject to capacity demand thresholds 310a, 310b to *b* shared small cells 100, then the constraint becomes

$$t_n \leq \frac{\lambda_{M,max}}{x_n - f_n b \lambda_{S,max}}$$

where $\lambda_{S,max}$ is the maximum traffic a shared small cell 100 is able to accommodate and $f_n$ is the fraction of small cell resources that operator n uses $\left(\sum_{i=1}^{N} f_i = 1\right)$. Hence, $f_n$ is the sharing ratio.

Shared cells 100 are only switched on when really necessary due to energy efficiency constraints. Therefore, in some embodiments, the number *b* of active shared cells is chosen to be the minimum such that all constraints are satisfied. Therefore, only when one operator does not meet its provisioning factor constraint any longer (due to traffic load increase), a new shared cell should be turned on in some embodiments. An operating point may be the traffic load value for which a new small cell 100 is required.

If a fixed sharing ratio was used, resources available through shared cells would be shared among operators according to such agreed ratio and such that the over-provisioning constraints of all operators are satisfied. Whenever one operator has reached its constraint (i.e., require a new small cell), there might be at least another operator who is still above its constraint. Therefore, a dynamic sharing of the resources, deviating from the agreed fixed sharing ratio without violating the policy constraints of any operator, can be applied, such that the operating point is delayed (delay in terms of traffic load) in some embodiments. Such areas in which a dynamic sharing could bring benefits will be referred to as "critical areas".

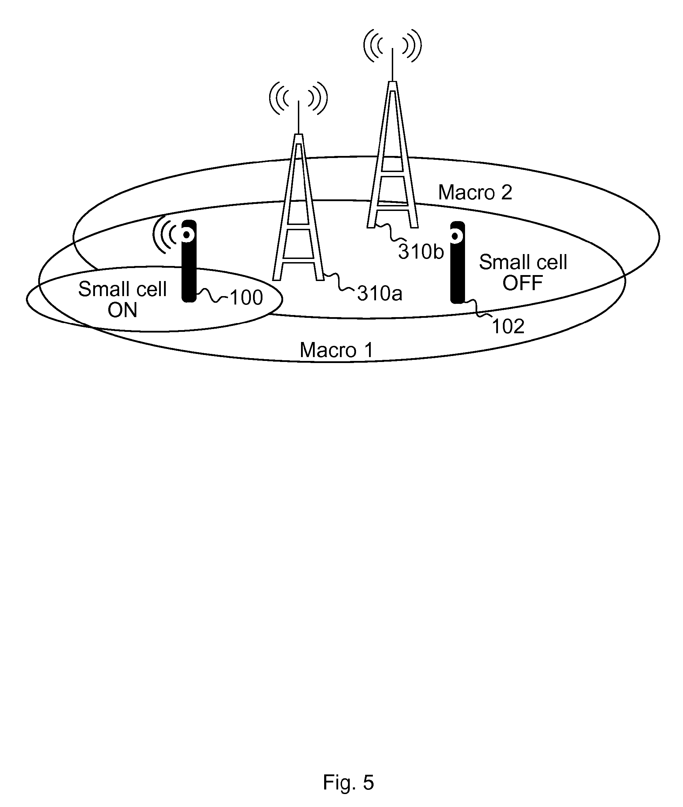

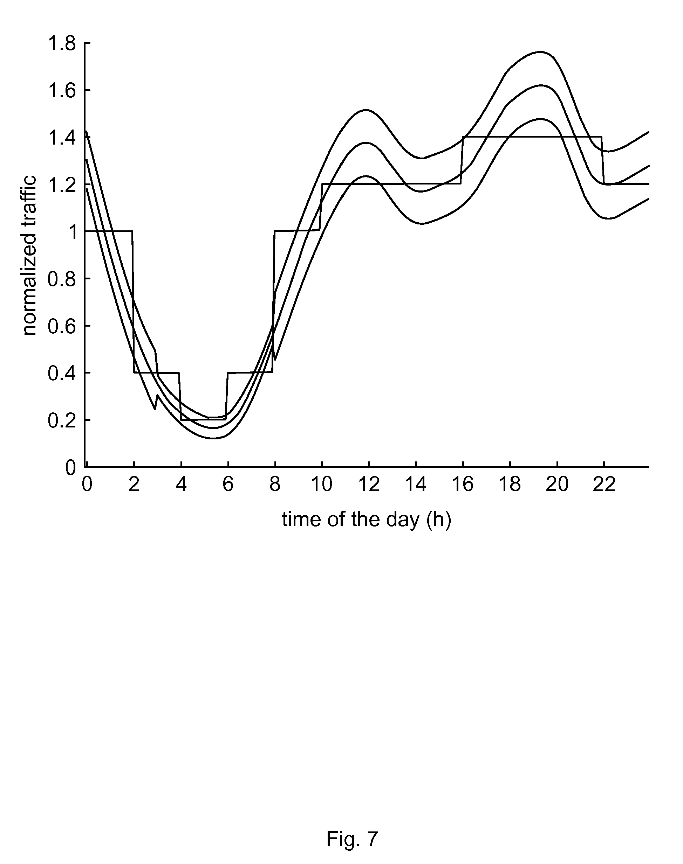

Fig. 5 illustrates an embodiment of an apparatus for a scenario with two cells subject to capacity demand thresholds 310a and 310b, and two shared cells 100 and 102. In the embodiment shown in Fig. 5 the small cell 100 is currently switched on while the small cell 102 is currently switched off. Fig. 7 shows a diagram of a traffic profile over the day, where the x-axis depicts the hours of the day and the y-axis depicts the normalized traffic. In Fig. 7 the value 1 corresponds to 2.26 arrivals/s. Fig. illustrates a traffic demand over the day and the variations may be compensated by activation/deactivation of small cells.

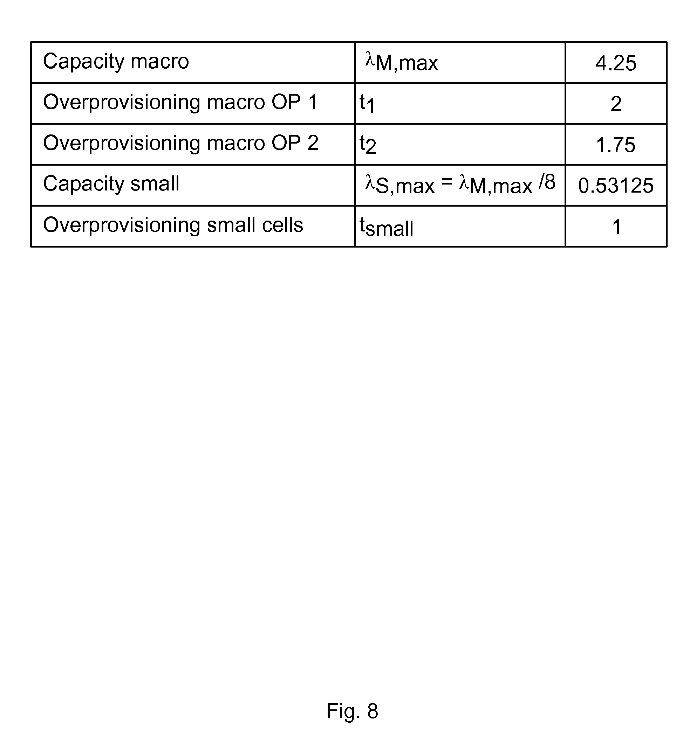

In a more concrete embodiment, two operators may have two cells 310a, 310b subject to capacity demand thresholds that are overlapping and shared cells 100 in their coverage area shared by the operators with a fixed sharing ratio 50%-50% (see Fig. 5). As traffic patterns, File Transfer Protocol (FTP) sessions of 2MByte, with an actual maximum arrival rate (busy hours) equal to 3.168 sessions/s (corresponding to 1.4 in Fig. 7) are assumed. Said maximum arrival rate is valid for the macro cell coverage area of one operator. The maximum rate a (macro) cell subject to capacity demand thresholds 310a, 310b can possibly accommodate by means of its resources at a given point in time is set to 4.25 sessions/s. It is assumed that a shared (small) cell 100 is able to accommodate 0.53125 sessions/s. Generally speaking, $\lambda_{S,max}$ is reasonably smaller than $\lambda_{M_n,max}$ because the area of a small cell 100 as well as the probability of having users in there is smaller than macro cells 310a, 310b. The considered parameters are summarized in the table depicted in Fig. 8.

It is assumed, that the operators have the following policies:

- Operator 1: "gold user operator" aims at maximizing the QoS of its users. Energy saving is not the highest priority.
- Operator 2: "cheap operator" with "low budget" customers. Energy saving has a high priority for cost reasons. Weaker constraints on QoS of mobile users.

Different policies are translated into different over-provisioning constraints. It is assumed the first operator requires an over-provisioning constraint of 2 and the second operator requires an over-provisioning constraint of 1.75.

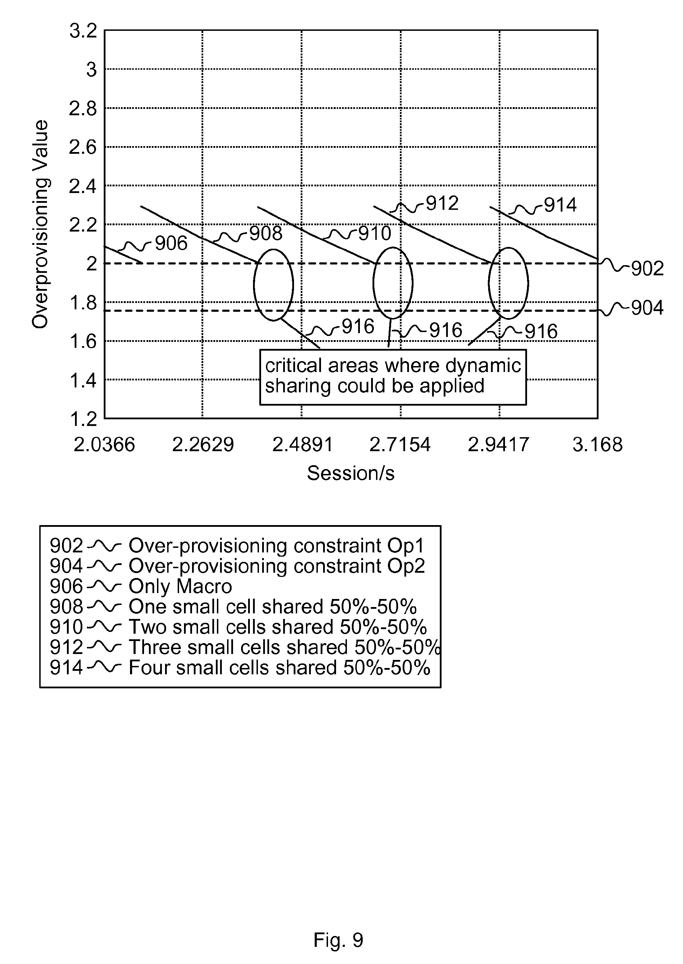

If dynamic resource repartition were not applied, shared cells 100, 102 would be shared 50%-50% and a new shared cell 102 would be switched on whenever (increasing traffic load) the over-provisioning value goes below the constraint of operator 1 (which is the operator with the tightest constraint). Fig. 9 shows the over-provisioning value vs. traffic load for small cells shared 50%-50%. Graph 902 shows the over-provisioning constraint of operator 1, graph 904 shows the overprovisioning constraint of operator 2, graph 906 shows over-provisioning curve with only the macro cell, graph 908 shows the over-provisioning curve with one activated shared cell 100 shared at a fixed 50%-50% sharing ratio, graph 910 shows the over-provisioning curve with two activated shared cells 100, 102 shared at a fixed 50%-50% sharing ratio, graph 912 shows the over-provisioning curve with three activated shared cells shared at a fixed 50%-50% sharing ratio, graph 914 shows the over-provisioning curve with four activated shared cells shared at a fixed 50%-50% sharing ratio, and 916 shows the critical areas where dynamic sharing could be applied in some embodiments. It is clear from the figure that when the traffic increases enough, operators need to switch on shared cells in order to offload traffic and meet the over-provisioning factor at the cell subject to capacity demand thresholds. In the figure, the "critical areas" have been highlighted for which a smart dynamic sharing ratio could be applied in order to delay the switching-on (operating points) of the shared cell in some embodiments.

Roughly speaking, when the provisioning curve exactly meets the constraint for the first operator, the dynamic resource allocation assigns more resources to the first operator, such that its provisioning value is kept to 2, and a smaller sharing ratio is assigned to the second operator, for which the constraint is still satisfied. This mechanism can be applied in some embodiments until both constraints are met exactly. The first operating point (i.e., traffic value for which the first small cell needs to be switched on) cannot be delayed because the macro is not shared, therefore as soon as the first operator needs extra capacity, a shared cell needs to be ON, and there is no difference between fixed or dynamic (i.e., the operator 1 cannot take capacity from the cell subject to capacity demand thresholds of operator 2 in order to delay first operating point). In contrast, the second operating point can be evaluated as

$$\frac{4.25}{x - f_1 \cdot 0.53125} = 2 \text{ and } \frac{4.25}{x - (1 - f_1) \cdot 0.53125} = 1.75$$

Hence, the two equations with two variables can be solved and return as solution $f_1$ = 0.786 (correspondingly, $f_2$ = 0.214) and $x$ = 2.54 *sessions/s*. This means that, at an arrival rate of 2.54 sessions/s, a second shared cell necessarily needs to be ON in order to meet the policy requirements of both operators.

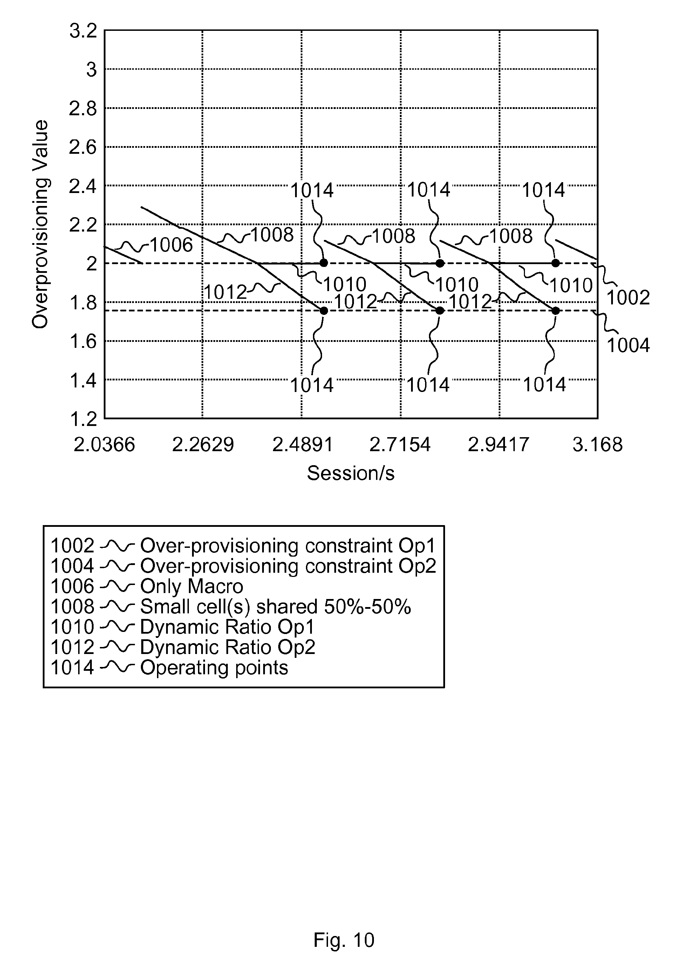

Corresponding results are shown in Fig. 10. Graph 1002 shows the over-provisioning constraint of the first operator, graph 1004 shows the overprovisioning constraint of the second operator, graph 1006 shows the overprovisioning value when only the macro cell base stations are activated, graph 1008 shows the overprovisioning value when 1, 2, 3 and 4 shared cells are additionally activated, graph 1010 shows the dynamic ratio of the first operator, graph 1012 shows the dynamic ratio of the second operator, and 1014 shows the operating points. In the case of a static 50%-50% sharing ratio (Fig. 9), the second shared cell would have to be switched on already at an arrival rate of 2.39 sessions/s. Iteratively, the operation points for three and four shared cells can be elaborated.

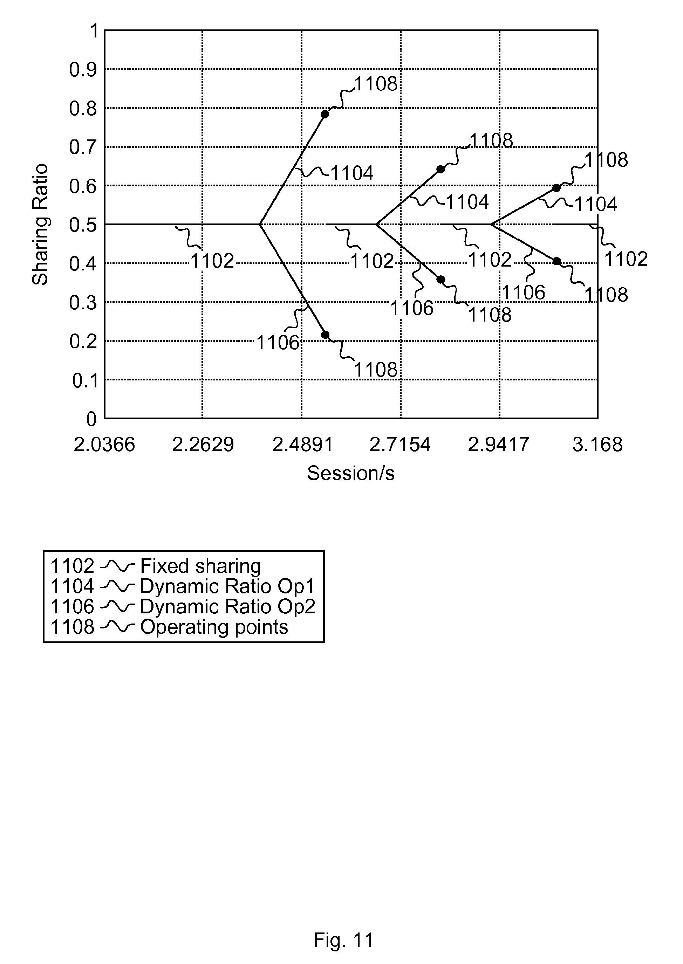

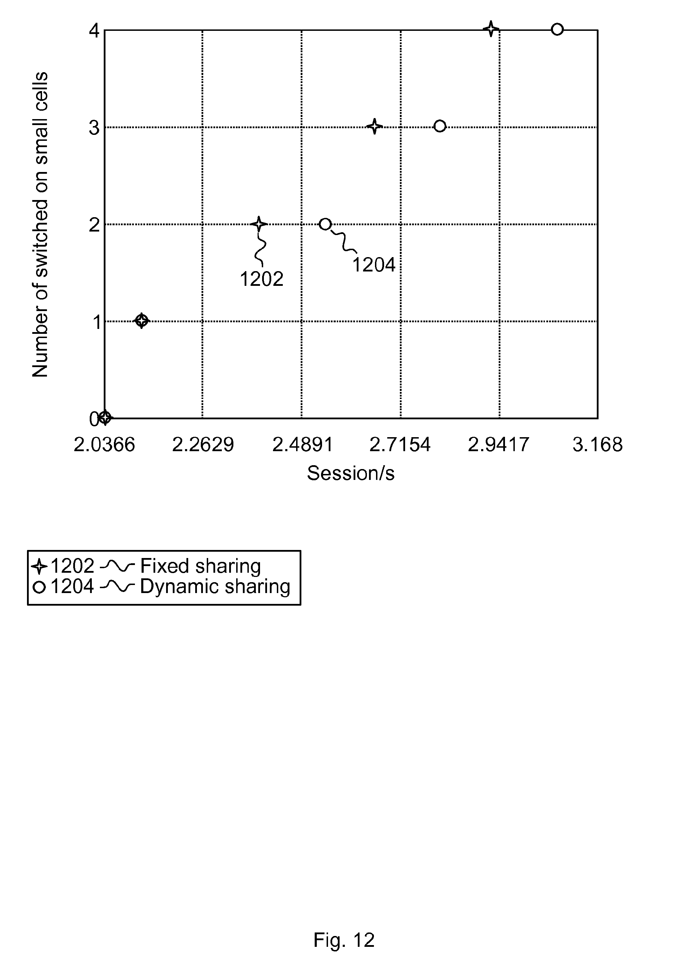

Fig. 11 shows the sharing ratio assigned to the two operators varying the traffic load. Graph 1102 shows the fixed sharing ratio of a 50%-50% sharing ratio, graph 1104 shows the dynamic sharing ratio for the first operator, graph 1106 shows the dynamic sharing ratio for the second operator, and 1108 depicts the operating points. Finally, Fig. 12 shows the operating points for the dynamic sharing assignment vs. the fixed sharing ratio. Points 1202 mark the operating points for fixed sharing, and points 1204 mark the operating points for dynamic sharing. As it is clear from this figure, the gain is relevant, especially if it is considered that these operating points could actually defer by several hours and thus substantially contribute to energy savings (the actual gain depends also on the traffic probability distribution). Therefore, dynamic sharing may bring benefit to operators not only in terms of cost, but also in terms of energy, i.e., switching on of small cell is delayed as much as possible.

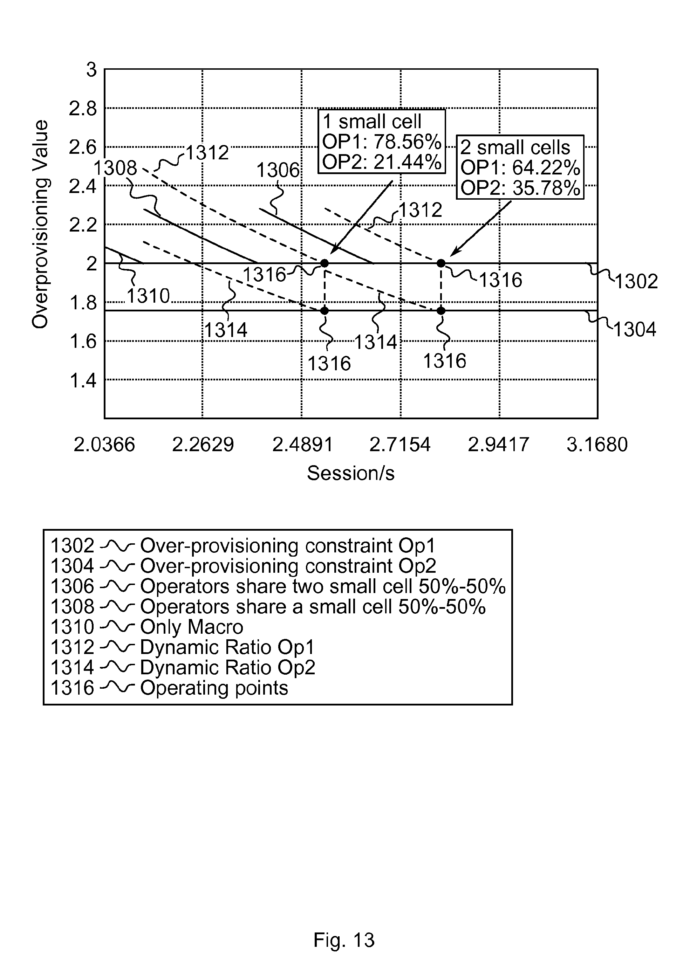

In some embodiments, the sharing ratio determined at the operating points is applied for the whole time in which the corresponding small cells are on. Fig. 13 shows the same example described above using this approach. Graph 1302 shows the over-provisioning constraint for the first operator, graph 1304 shows the over-provisioning constraint for the second operator, graph 1306 shows the overprovisioning value when operators share two small cells 50%-50%, graph 1308 shows the overprovisioning value when operators share one small cell 50%-50%, graph 1310 shows the overprovisioning value when only the macro cells are activated, graph 1312 shows the (dynamic) sharing ratio for the first operator, graph 1314 shows the (dynamic) sharing ratio for the second operator when the proposed dynamic approach is adopted, and points 1316 mark the operating points. Comparing the approaches with or without fixed initial sharing ratios, the operating points are the same regardless of the approach, and there is no difference in terms of energy consumption, but only in terms of sharing ratio. A fixed initial sharing ratio corresponds to a sharing ratio agreed upon by the two or more operators. It may be used to partition the capacity of the shared cell before a repartitioning of the capacity to meet the capacity demand thresholds of the two or more operators is applied. The fixed initial sharing ratio is an initial value, which may be violated by subsequent adaptations of the sharing ratio. It is up to the operators to decide which variation to apply.

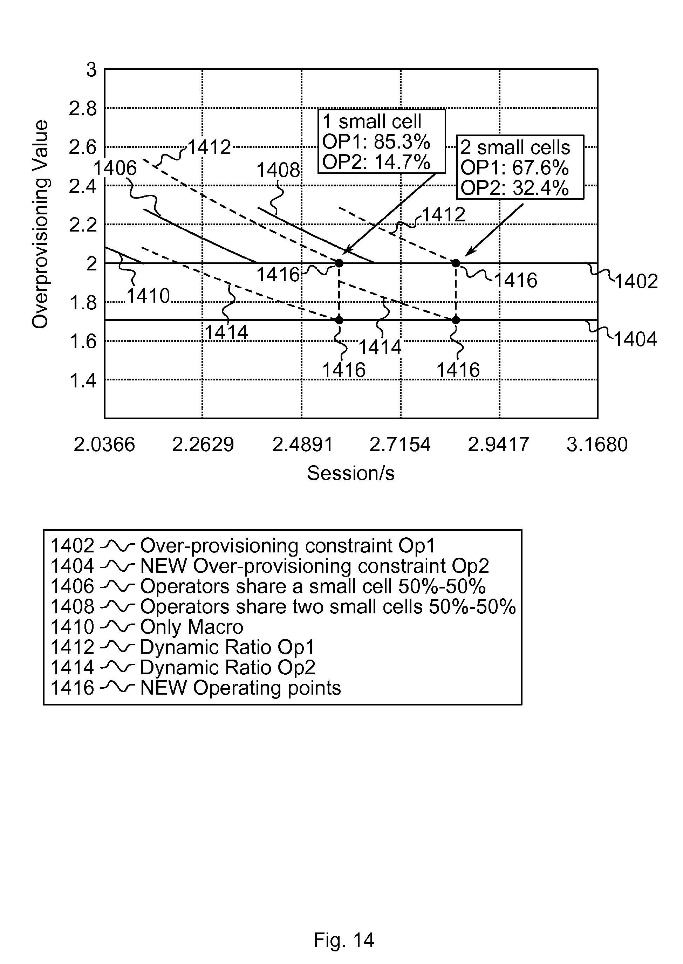

In another embodiment, it is shown how this mechanism iterates when operators update their policies. It is assumed that the second operator (OP2) decides to save money sacrificing even more the quality of service, thus decreasing the over-provisioning factor of the macro from 1.75 to 1.7. The resource repartition function takes the new input and repeats the procedure shown above. New operating points are then assigned to the operators. This is shown in Fig. 14 (using the approach of Fig. 13, without fixed initial sharing ratio). Graph 1402 shows the over-provisioning constraint for the first operator, graph 1404 shows the new over-provisioning constraint for the second operator, graph 1406 shows the overprovisioning value when operators share one small cells 50%-50%, graph 1408 shows the over-provisioning value when operators share two small cells 50%-50%, graph 1410 shows the over-provisioning value when only the macro cells are activated, graph 1412 shows the (dynamic) sharing ratio for the first operator, graph 1414 shows the (dynamic) sharing ratio for the second operator when the proposed dynamic approach is adopted, and points 1416 mark the new operating points. As expected, the second operator gets a smaller sharing ratio. Similar calculation can be done for the case of fixed initial sharing ratio shown in Fig. 9-12.

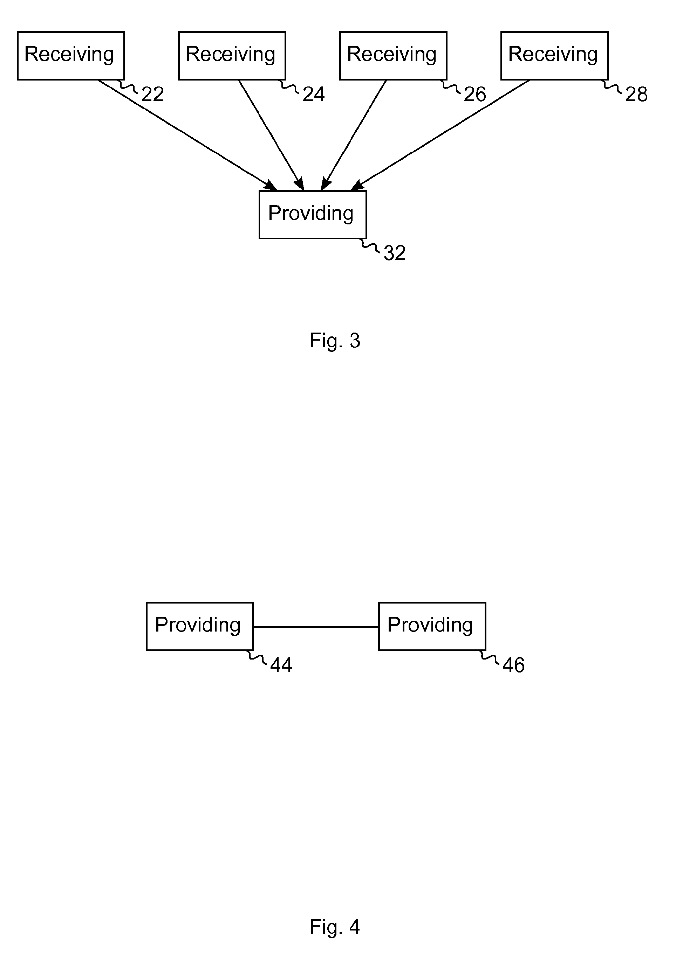

Fig. 3 shows a block diagram of a flow chart of an embodiment of method for determining information related to a dynamic activation of one or more shared cells 100 in a mobile communication system 300. The mobile communication system 300 further comprises two or more cells 310a, 310b subject to capacity demand thresholds. The one or more shared cells 100 are shared among two or more operators. The method comprises receiving 22 information related to a first capacity demand threshold of a cell 310a subject to capacity demand thresholds of a first operator, receiving 24 information related to a second capacity demand threshold of a cell 310b subject to capacity demand thresholds of a second operator, receiving 26 information related to a current capacity demand for the first operator in at least a part of the mobile communication system 300 and receiving 28 information related to a current capacity demand for the second operator in at least a part of the mobile communication system 300. It further comprises providing 32 information related to the dynamic activation of at least one of the one or more shared cells 100 in case the first capacity demand exceeds the first capacity demand threshold or in case the second capacity demand exceeds the second capacity demand threshold.

Fig. 4 shows a block diagram of a flow chart of an embodiment of a method for a base station transceiver 200 of a mobile communication system 300. The mobile communication system 300 further comprises one or more shared cells 100. The method comprises providing 44 information related to a capacity demand threshold, and providing 46 information related to a current capacity demand.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

**Claims**

1. An apparatus (10) for determining information related to a dynamic activation of one or more shared cells (100) in a mobile communication system (300), the mobile communication system further comprising two or more cells (310a; 310b) subject to capacity demand thresholds, and wherein the one or more shared cells (100) are shared among two or more operators, the apparatus (10) comprising
at least one input (12) for receiving information related to a first capacity demand threshold for at least one cell (310a) subject to capacity demand thresholds of a first operator, information related to a second capacity demand threshold for at least one cell (310b) subject to capacity demand thresholds of a second operator, information related to a current capacity demand for the first operator in at least a part of the mobile communication system (300), and information related to a current capacity demand for the second operator in at least a part of the mobile communication system (300); and
a control module (14) to provide the information related to the dynamic activation of at least one of the one or more shared cells (100) to offload load from at least one of the two or more cells (310a; 310b) subject to capacity demand thresholds in case the first current capacity demand exceeds the first capacity demand threshold or in case the second current capacity demand exceeds the second capacity demand threshold.

2. The apparatus (10) of claim 1, wherein the information related to the first capacity demand threshold is based on a first operator policy, and wherein the information related to the second capacity demand threshold is based on a second operator policy, wherein the first and/or the second operator policy are related to one or more elements of the group of a desired drop probability, a desired admission probability, a desired quality of service requirement, a desired overprovisioning capacity headroom, or a desired energy consumption.

3. The apparatus (10) of claim 1, wherein the control module (14) is configured to dynamically repartition the capacity provided by the shared cell (100) between the two or more operators based on the first capacity demand threshold and/or the second capacity demand threshold.

4. The apparatus (10) of claim 1, wherein the controller module (14) is configured to compare the first capacity demand threshold for the first operator and/or the second capacity demand threshold for the second operator to the current capacity demand for the first operator and/or the current capacity demand for the second operator.

5. The apparatus (10) of claim 1, wherein the control module (14) is configured to dynamically activate the one or more shared cells (100) to avoid the first current capacity demand violating the first capacity demand threshold, and/or to avoid the second current capacity demand violating the second capacity demand threshold.

6. The apparatus (10) of claim 1, wherein the first capacity demand threshold is defined by the first operator independently from the second capacity demand threshold defined by the second operator.

7. The apparatus (10) of claim 1, wherein the input (12) is configured to obtain at least some of the information from at least one base station transceiver (200) operated by the one or more operators sharing the one or more shared cells (100).

8. The apparatus (10) of claim 1, wherein the one or more shared cells (100) and/or the two or more cells (310a; 310b) subject to capacity demand thresholds comprise one or more cells of the group of macro cells, metro cells, micro cells, pico cells, or femto cells and/or wherein the two or more cells subject to capacity demand thresholds (310a; 310b) correspond to non-shared cells of different operators.

9. The apparatus (10) of claim 1, wherein the information related to the activation of at least one of the one or more shared cells (100) is derived from

$$t_i \leq \frac{capacity_{max,i}}{capacity_{demand,i}}$$

wherein $t_i$ corresponds to the first capacity demand threshold of the first operator i, $capacity_{max,i}$ corresponds to the capacity available for the first operator i in at least the one cell (310a) subject to capacity demand thresholds, and $capacity_{demand,i}$ corresponds to the current capacity demand for the first operator i in at least the one cell (310a) subject to capacity demand thresholds, and

$$t_n \leq \frac{capacity_{max,n}}{capacity_{demand,n}}$$

wherein $t_n$ corresponds to the capacity demand threshold of the second operator n, $capacity_{max,n}$ corresponds to the capacity available for the second operator n in at least the one cell (310b) subject to capacity demand thresholds, and $capacity_{demand,n}$ corresponds to the current capacity demand for the second operator n in at least the one cell (310b) subject to capacity demand thresholds, such that if the first operator i cannot meet the capacity demand threshold $t_i$, the control module (14) is configured to increase a capacity share of the first operator in the at least one shared cell (100) for as long as the capacity demand threshold $t_n$ of the second operator in the at least one cell subject to capacity demand thresholds (310b) is met, and to activate at least one of the one or more shared cells (100) otherwise.

10. An apparatus (20) for a base station transceiver (200) of a mobile communication system (300), the mobile communication system (300) further comprising one or more shared cells (100), the apparatus (20) comprising at least one output (42) for providing information related to a capacity demand threshold and information related to a current capacity demand.

11. The apparatus (20) of claim 10, wherein the information related to the capacity demand threshold is based on an operator policy, and wherein the information is related to one or more elements of the group of a desired drop probability, a desired admission probability, a desired quality of service requirement, a desired overprovisioning capacity headroom, or a desired energy consumption.

**12.** The apparatus (20) of claim 10, wherein the information related to the capacity demand threshold and the capacity demand are derived from

$$t \leq \frac{\lambda_{M,max}}{x - x_{offload}}$$

wherein $t$ corresponds to the capacity demand threshold of the operator, $\lambda_{M,max}$ corresponds to an upper capacity utilization limit of a base station transceiver (200) of the operator, $x$ corresponds to the total capacity currently demanded by the operator, $x_{offload}$ corresponds to the total load currently offloaded by the shared cells, where

$$x_{offload} = \sum_{i=1}^{b} f_i \cdot \lambda_{s,i,max},$$ where $b$ is the number of shared cells (100) currently activated for two or more operators, $f_i$ is the fraction of the capacity of the shared cell $i$ of the one or more shared cells (100) that is currently allocated to the operator, and $\lambda_{S,i,max}$ corresponds to an upper capacity utilization limit of a shared cell $i$ of the one or more shared cells (100).

**13.** A method for determining information related to a dynamic activation of one or more shared cells (100) in a mobile communication system (300), the mobile communication system (300) further comprising two or more cells (310a; 310b) subject to capacity demand thresholds, and wherein the one or more shared cells (100) are shared among two or more operators, the method comprising receiving (22) information related to a first capacity demand threshold of a cell (310a) subject to capacity demand thresholds of a first operator;
receiving (24) information related to a second capacity demand threshold of a cell (310b) subject to capacity demand thresholds of a second operator;
receiving (26) information related to a current capacity demand for the first operator in at least a part of the mobile communication system;
receiving (28) information related to a current capacity demand for the second operator in at least a part of the mobile communication system;
providing (32) information related to the dynamic activation of at least one of the one or more shared cells (100) in case the first capacity demand exceeds the first capacity demand threshold or in case the second capacity demand exceeds the second capacity demand threshold.

**14.** A method for a base station transceiver (200) of a mobile communication system (300), the mobile communication system (300) further comprising one or more shared cells (100), the method comprising
providing (44) information related to a capacity demand threshold; and
providing (46) information related to a current capacity demand.

**15.** A computer program having a program code for performing at least one of the methods of claims 13 and 14, when the computer program is executed on a computer, a processor, or a programmable hardware component.

**Amended claims in accordance with Rule 137(2) EPC.**

**1.** An apparatus (10) for determining information related to a dynamic activation of one or more shared cells (100) in a mobile communication system (300), the mobile communication system further comprising two or more cells (310a; 310b) subject to capacity demand thresholds, and wherein the one or more shared cells (100) are shared among two or more operators, the apparatus (10) comprising
at least one input (12) for receiving information related to a first capacity demand threshold for at least one cell (310a) subject to capacity demand thresholds of a first operator, information related to a second capacity demand threshold for at least one cell (310b) subject to capacity demand thresholds of a second operator, information related to a current capacity demand for the first operator in at least a part of the mobile communication system (300), and information related to a current capacity demand for the second operator in at least a part of the mobile communication system (300); and
a control module (14) to:

dynamically repartition the capacity provided by the one or more shared cells (100) between the two or more operators based on the first capacity demand threshold and/or the second capacity demand threshold, as long as the first and second capacity demand thresholds of the first and second operator are met, and
provide the information related to the dynamic activation of at least one of the one or more shared cells (100) to offload load from at least one of the two or more cells (310a; 310b) subject to capacity demand thresholds in case the first current capacity demand exceeds the first capacity demand threshold or in case the second current capacity demand exceeds the second capacity demand threshold.

2. The apparatus (10) of claim 1, wherein the information related to the first capacity demand threshold is based on a first operator policy, and wherein the information related to the second capacity demand threshold is based on a second operator policy, wherein the first and/or the second operator policy are related to one or more elements of the group of a desired drop probability, a desired admission probability, a desired quality of service requirement, a desired overprovisioning capacity headroom, or a desired energy consumption.

3. The apparatus (10) of claim 1, wherein the controller module (14) is configured to compare the first capacity demand threshold for the first operator and/or the second capacity demand threshold for the second operator to the current capacity demand for the first operator and/or the current capacity demand for the second operator.

4. The apparatus (10) of claim 1, wherein the control module (14) is configured to dynamically activate the one or more shared cells (100) to avoid the first current capacity demand violating the first capacity demand threshold, and/or to avoid the second current capacity demand violating the second capacity demand threshold.

5. The apparatus (10) of claim 1, wherein the first capacity demand threshold is defined by the first operator independently from the second capacity demand threshold defined by the second operator.

6. The apparatus (10) of claim 1, wherein the input (12) is configured to obtain at least some of the information from at least one base station transceiver (200) operated by the one or more operators sharing the one or more shared cells (100).

7. The apparatus (10) of claim 1, wherein the one or more shared cells (100) and/or the two or more cells (310a; 310b) subject to capacity demand thresholds comprise one or more cells of the group of macro cells, metro cells, micro cells, pico cells, or femto cells and/or wherein the two or more cells subject to capacity demand thresholds (310a; 310b) correspond to non-shared cells of different operators.

8. The apparatus (10) of claim 1, wherein the information related to the activation of at least one of the one or more shared cells (100) is derived from

$$t_i \leq \frac{capacity_{max,i}}{capacity_{demand,i}}$$

wherein $t_i$ corresponds to the first capacity demand threshold of the first operator i, $capacity_{max,i}$ corresponds to the capacity available for the first operator i in at least the one cell (310a) subject to capacity demand thresholds, and $capacity_{demand,i}$ corresponds to the current capacity demand for the first operator i in at least the one cell (310a) subject to capacity demand thresholds, and

$$t_n \leq \frac{capacity_{max,n}}{capacity_{demand,n}}$$

wherein $t_n$ corresponds to the capacity demand threshold of the second operator n, $capacity_{max,n}$ corresponds to the capacity available for the second operator n in at least the one cell (310b) subject to capacity demand thresholds, and $capacity_{demand,n}$ corresponds to the current capacity demand for the second operator n in at least the one cell (310b) subject to capacity demand thresholds, such that if the first operator i cannot meet the capacity demand threshold $t_i$, the control module (14) is configured to increase a capacity share of the first operator in the one or more shared cells (100) for as long as the capacity demand threshold $t_n$ of the second operator in the at least one cell subject to capacity demand thresholds (310b) is met, and to activate at least one of the one or more shared cells (100) otherwise.

9. An apparatus (20) for a base station transceiver (200) of a mobile communication system (300), the mobile communication system (300) further comprising one or more shared cells (100), the apparatus (20) comprising
at least one output (42) for providing information related to a capacity demand threshold and information related to a current capacity demand,
wherein the information related to the capacity demand threshold is based on an operator policy, and wherein the information related to the capacity demand threshold is related to one or more elements of the group of a desired drop probability, a desired admission probability, a desired quality of service requirement, a desired overprovisioning capacity headroom, or a desired energy consumption.

10. The apparatus (20) of claim 10, wherein the information related to the capacity demand threshold and the capacity demand are derived from

$$t \le \frac{\lambda_{M,max}}{x - x_{offload}}$$

wherein t corresponds to the capacity demand threshold of the operator, $\lambda_{M,max}$ corresponds to an upper capacity utilization limit of a base station transceiver (200) of the operator, $x$ corresponds to the total capacity currently demanded by the operator, $x_{offload}$ corresponds to the total load currently offloaded by the shared cells, where $x_{offload} = \sum_{i=1}^{b} f_i \cdot \lambda_{s,i,max}$, where $b$ is the number of shared cells (100) currently activated for two or more operators, $f_i$ is the fraction of the capacity of the shared cell $i$ of the one or more shared cells (100) that is currently allocated to the operator, and $\lambda_{S,i,max}$ corresponds to an upper capacity utilization limit of a shared cell $i$ of the one or more shared cells (100).

11. A method for determining information related to a dynamic activation of one or more shared cells (100) in a mobile communication system (300), the mobile communication system (300) further comprising two or more cells (310a; 310b) subject to capacity demand thresholds, and wherein the one or more shared cells (100) are shared among two or more operators, the method comprising
receiving (22) information related to a first capacity demand threshold of a cell (310a) subject to capacity demand thresholds of a first operator;
receiving (24) information related to a second capacity demand threshold of a cell (310b) subject to capacity demand thresholds of a second operator;
receiving (26) information related to a current capacity demand for the first operator in at least a part of the mobile communication system;
receiving (28) information related to a current capacity demand for the second operator in at least a part of the mobile communication system;
dynamically repartitioning (29) the capacity provided by the one or more shared cells (100) between the two or more operators based on the first capacity demand threshold and/or the second capacity demand threshold, as long as the first and second capacity demand thresholds of the first and second operator are met; and
providing (32) information related to the dynamic activation of at least one of the one or more shared cells (100) in case the first capacity demand exceeds the first capacity demand threshold or in case the second capacity demand exceeds the second capacity demand threshold.

12. A method for a base station transceiver (200) of a mobile communication system (300), the mobile communication system (300) further comprising one or more shared cells (100), the method comprising
providing (44) information related to a capacity demand threshold; and
providing (46) information related to a current capacity demand,
wherein the information related to the capacity demand threshold is based on an operator policy, and wherein the information related to the capacity demand is related to one or more elements of the group of a desired drop probability, a desired admission probability, a desired quality of service requirement, a desired overprovisioning capacity headroom, or a desired energy consumption.

13. A computer program having a program code for performing at least one of the methods of claims 11 and 12, when the computer program is executed on a computer, a processor, or a programmable hardware component.

Fig. 1

Fig. 2

| Receiving 22 | Receiving 24 | Receiving 26 | Receiving 28 |

Providing 32

Fig. 3

| Providing 44 | Providing 46 |

Fig. 4

Fig. 5

Network policy → [Policy] → $t_1$ →

⋮     ⋮

Network policy → [Policy] → $t_n$ →

[Resource repartition]

Sharing ratios $\{f1,...,fn\}$ → to MAC layer

14

Fig. 6

Fig. 7

| Capacity macro | $\lambda_{M,max}$ | 4.25 |
|---|---|---|
| Overprovisioning macro OP 1 | $t_1$ | 2 |
| Overprovisioning macro OP 2 | $t_2$ | 1.75 |
| Capacity small | $\lambda_{S,max} = \lambda_{M,max}/8$ | 0.53125 |
| Overprovisioning small cells | $t_{small}$ | 1 |

Fig. 8

Fig. 9

Fig. 10

Fig. 11

Fig. 12

Fig. 13

**1 small cell**
OP1: 85.3%
OP2: 14.7%

**2 small cells**
OP1: 67.6%
OP2: 32.4%

Fig. 14

1402 ∿ Over-provisioning constraint Op1
1404 ∿ NEW Over-provisioning constraint Op2
1406 ∿ Operators share a small cell 50%-50%
1408 ∿ Operators share two small cells 50%-50%
1410 ∿ Only Macro
1412 ∿ Dynamic Ratio Op1
1414 ∿ Dynamic Ratio Op2
1416 ∿ NEW Operating points

Europäisches
Patentamt

European
Patent Office

Office européen
des brevets

# EUROPEAN SEARCH REPORT

Application Number

EP 14 30 6676

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br><br>A | WO 2013/066127 A1 (SAMSUNG ELECTRONICS CO LTD [KR]) 10 May 2013 (2013-05-10)<br>* abstract *<br>* paragraph [0004] - paragraph [0006] *<br>* paragraph [0022] - paragraph [0026] *<br>* paragraph [0062] - paragraph [0067] *<br>* paragraph [0086] - paragraph [0126] *<br>* figures 3-6 * | 10,14,15<br>1-8,<br>11-13<br>9 | INV.<br>H04W24/02 |
| Y<br><br>A | US 2013/286851 A1 (MOSER BRETT [US] ET AL) 31 October 2013 (2013-10-31)<br>* abstract *<br>* paragraph [0016] - paragraph [0018] *<br>* paragraph [0086] - paragraph [0109] * | 1-8,<br>11-13<br>9 | |
| A | EP 2 688 348 A1 (ALCATEL LUCENT [FR]) 22 January 2014 (2014-01-22)<br>* abstract *<br>* paragraph [0003] *<br>* paragraph [0028] *<br>* paragraph [0050] - paragraph [0051] *<br>* paragraph [0063] - paragraph [0074] *<br>* claim 2 * | 1-8,<br>11-13 | |
| A | WO 2014/060424 A2 (NEC EUROPE LTD [DE]) 24 April 2014 (2014-04-24)<br>* abstract *<br>* page 10, line 10 - page 13, line 8 *<br>* figure 2 * | 1-8,<br>11-13 | TECHNICAL FIELDS SEARCHED (IPC)<br><br>H04W |
| A | EP 2 496 050 A1 (ALCATEL LUCENT [FR]) 5 September 2012 (2012-09-05)<br>* abstract *<br>* paragraph [0011] - paragraph [0013] *<br>* paragraph [0019] - paragraph [0029] *<br>* paragraph [0051] - paragraph [0054] *<br>* paragraph [0072] - paragraph [0079] * | 1-8,<br>11-13 | |

-/--

The present search report has been drawn up for all claims

| Place of search | Date of completion of the search | Examiner |
|---|---|---|
| Munich | 4 March 2015 | Lombardi, Giuseppe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ..........................................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 14 30 6676

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 262 335 A1 (HUAWEI TECH CO LTD [CN]) 15 December 2010 (2010-12-15) * the whole document * ----- | 3,9 | |
| X | EP 2 512 171 A1 (ALCATEL LUCENT [FR]) 17 October 2012 (2012-10-17) * the whole document * ----- | 10,14,15 | |

TECHNICAL FIELDS
SEARCHED (IPC)

The present search report has been drawn up for all claims

| Place of search | Date of completion of the search | Examiner |
|---|---|---|
| Munich | 4 March 2015 | Lombardi, Giuseppe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

..........................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 14 30 6676

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2015

| Patent document cited in search report | | Publication date | Patent family member(s) | | Publication date |
|---|---|---|---|---|---|
| WO 2013066127 | A1 | 10-05-2013 | CN<br>EP<br>WO | 103096347 A<br>2774405 A1<br>2013066127 A1 | 08-05-2013<br>10-09-2014<br>10-05-2013 |
| US 2013286851 | A1 | 31-10-2013 | NONE | | |
| EP 2688348 | A1 | 22-01-2014 | EP<br>WO | 2688348 A1<br>2014012804 A1 | 22-01-2014<br>23-01-2014 |
| WO 2014060424 | A2 | 24-04-2014 | NONE | | |
| EP 2496050 | A1 | 05-09-2012 | NONE | | |
| EP 2262335 | A1 | 15-12-2010 | CN<br>EP<br>WO | 101267651 A<br>2262335 A1<br>2009121302 A1 | 17-09-2008<br>15-12-2010<br>08-10-2009 |
| EP 2512171 | A1 | 17-10-2012 | CN<br>EP<br>JP<br>JP<br>KR<br>US<br>WO | 103477674 A<br>2512171 A1<br>5612794 B2<br>2014512143 A<br>20140009494 A<br>2014155078 A1<br>2012140037 A1 | 25-12-2013<br>17-10-2012<br>22-10-2014<br>19-05-2014<br>22-01-2014<br>05-06-2014<br>18-10-2012 |

EPO FORM P0459

For more details about this annex : see Official Journal of the European Patent Office, No. 12/82